# EUROPEAN PATENT SPECIFICATION

(11) **EP 2 560 847 B1**
(45) Date of publication and mention of the grant of the patent: **20.04.2016**
(21) Application number: 10714642.5
(22) Date of filing: 22.04.2010
(51) Int. Cl.: B60S 1/38, B60S 1/34

(54) **A WINDSCREEN WIPER DEVICE**
SCHEIBENWISCHERVORRICHTUNG
DISPOSITIF D'ESSUIE-GLACE

(43) Date of publication of application: 27.02.2013
(73) Proprietor: Federal-Mogul S.A., 6790 Aubange (BE)
(72) Inventor: FRISCIONI, Thomas, F-57710 Aumetz (FR)
(74) Representative: Hooiveld, Arjen Jan Winfried
(86) International application number: PCT/EP2010/055389
(87) International publication number: WO 2011/131245

(56) References cited:
- EP-A1- 2 143 602
- DE-U1- 8 702 684
- FR-A5- 2 139 353
- GB-A- 776 177
- US-A- 5 867 859

## Description

The invention relates to a windscreen wiper device, particularly for automobiles, comprising an elastic, elongated carrier element, as well as an elongated wiper blade of a flexible material, which can be placed in abutment with a windscreen to be wiped, which wiper blade is of the flat blade type and includes at least one groove, in which groove a longitudinal strip of the carrier element is disposed, wherein said windscreen wiper device further comprises a mounting head for transferring a reciprocal movement to said wiper blade.

It is noted that the present invention is not restricted to cars, but also refers to rail coaches and other (fast) vehicles.

Such a windscreen wiper device is known from European patent publication no. 1 514 752 (Federal-Mogul S.A.). The windscreen wiper device described in this European patent publication comprises a mounting head mountable on a drive shaft and an arm member pivotally connected to the mounting head by means of a pivot pin, wherein the arm member has a substantially U-shaped cross-section near said pivot pin comprising two side walls, wherein a part of the mounting head extends between the side walls and beyond said pivot pin.

A disadvantage of the windscreen wiper arm known from the above European patent publication is that it comprises many complex parts with a dedicated shape, wherein reference is made to the oscillating arm described therein consisting of a plastic arm member at one end thereof pivotally connected to a mounting head by means of a pivot pin and at the other end thereof folded around a rod-like part. Obviously, this needs complex machinery, tools, with all the expenses involved.

To obviate this disadvantage, in the sense that at minimum costs - without using complex machinery and additional tools - the present Applicant has already proposed in European patent application no. 08160187.4 a connecting device for detachably connecting said wiper blade directly to said mounting head, wherein said connecting device is positioned near one end of said wiper blade. The gist of the above proposal is to refrain from the use of an intermediate oscillating arm, thereby avoiding an articulation between the oscillating arm and the wiper blade, as well as between the mounting head and the oscillating arm. Further, by directly connecting said connecting device to the mounting head, said wiper blade is mounted closer to the windscreen to be wiped, so that the wiping properties are improved. Accordingly, a simple though effective windscreen wiper device is achieved which fits on all kinds of different cars.

However, by directly connecting said connecting device to the mounting head, it has become apparent that the wiping properties may deteriorate if the mounting head is not properly mounted on the shaft.

FR-A-2139353 shows the preamble of claim 1.

It is an object of the present invention to obviate this disadvantage, i.e. to provide an improved windscreen wiper device, wherein excellent wiping properties are guaranteed at all times.

Thereto, according to the invention a windshield wiper arm mentioned in the preamble is characterized in that said connecting device is provided with a spacer detachably connected to said connecting device (7) for maintaining a predetermined distance between said connecting device and said windscreen to be wiped. Particularly, said spacer extends in downward direction from a bottom of said connecting device to said windscreen to be wiped, and wherein said spacer can be placed in abutment with said windscreen to be wiped. Hence, as a result of the use of said spacer or distance means, it is possible to mount said mounting head onto said shaft in a controllable manner, wherein said mounting head is firmly attached thereto, while being kept at a well-defined and predetermined distance from the windscreen to be wiped. In fact, by using different types of spacers for different cars, it is even possible to select such a distance for each type of car.

Said spacer is detachably connected to said connecting device, particularly through a snapping operation. In the alternative, said connecting device and said spacer are in one piece, such as one piece of plastic. In the latter case a unit consisting of said connecting device and said spacer comprises a weakening to allow separation of said spacer from said connecting device,
for example by hand or a specific tool. Said weakening preferably consists of a weakening line to allow separation of said spacer from said connecting device through a torque action, for example by hand.

Said connecting device and said mounting head are each preferably made of one piece. The present windscreen wiper device is particularly designed for use at a rear window of a car.

Preferably, said windscreen wiper device further comprises a connecting piece positioned near the other end of said wiper blade and connected to one end of said longitudinal strip. Preferably, said wiper blade includes opposing longitudinal grooves on its longitudinal sides, in which grooves spaced-apart longitudinal strips of the carrier element are disposed, wherein neighboring ends of said longitudinal strips are interconnected by said connecting device at one end of said wiper blade and by said connecting piece at the other end of said wiper blade. Said connecting device may be glued, soldered, clipped, snapped or welded onto said longitudinal strips.

In a preferred embodiment of a windscreen wiper device in accordance with the invention said mounting head is fixed for rotation to a shaft, and wherein said shaft is rotatable alternately in a clockwise and in a counter-clockwise sense carrying said mounting head into rotation. Thus, in turn said mounting head draws said connecting device into rotation and thereby moves said wiper blade. In the alternative, said mounting head is fixed for translation to a carriage, wherein said carriage can be translated alternately in a one linear direction and in another counter linear direction carrying said mounting head into translation. The present invention can therefore be used for circular or linear movement of said mounting head. Preferably, said shaft along a portion of its length and around at least a part of its outer surface is provided with a profile. Said profile preferably includes longitudinal grooves extending in co-axial direction of said shaft. Hence, a fixation without any play (i.e. without axial movement and/or rotational movement) between said mounting head and said shaft is realized.

In a further preferred embodiment of a windscreen wiper device according to the invention said mounting head is clamped around said shaft. Said mounting head particularly comprises a hole to receive said shaft, wherein said mounting head further comprises side walls extending beyond said shaft in mounted position thereof, and wherein said side walls are provided with a co-axial holes for receiving a pin for clamping said mounting head around said shaft through deformation of said side walls. More in particular, said mounting head is clamped around said shaft through screwing a nut onto said pin. The mounting head as a whole is particularly made of a sheet material, such as sheet metal, to allow (elastic of plastic) deformation thereof during said clamping action.

In a further preferred embodiment of a windscreen wiper device in accordance with the invention said longitudinal strip is biassed in such a way that its curvature near the connecting device is larger than that its curvature near the other end of said wiper blade, all seen in dismounted position. In other words, in dismounted position said wiper blade has an asymmetric shape, seen along its middle transverse plane perpendicular to a windscreen to be wiped. Thus, said wiper blade is able to follow any curvature of a windscreen to be wiped, while said wiper blade is pressed onto said windscreen to be wiper with sufficient force to enhance the wiping properties.

In a further preferred embodiment of a windscreen wiper device according to the invention the interconnection between the mounting head and the wiper blade does not allow any pivotal movement. In other words, in mounted position said mounting head and said connecting device cannot move relative to one another, i.e. are stationary with respect to each other.

In a further preferred embodiment of a windscreen wiper device in accordance with the invention said connecting device comprises at least one resilient tongue engaging in a correspondingly shaped hole provided in said mounting head, and wherein said resilient tongue is movable between a outward position retaining said wiper blade onto said mounting head and an inward position releasing said wiper blade from said mounting head. In order to connect the wiper blade onto the mounting head, said resilient tongue is initially pushed in against a spring force - as if it were a push button - and then allowed to spring back into the hole provided in said mounting head, thus snapping, that is clipping the resilient tongue into the hole. By subsequently pushing in again said resilient tongue against the spring force, the wiper blade may be released from the mounting head. Particularly, said hole has a closed circumference. Preferably, said resilient tongue is hingeable along an hinge axis, wherein the hinge axis is orientated towards said mounting head (so that said resilient tongue opens away from said mounting head) or facing away from said mounting head near an outer edge of said joint part (so that said resilient tongue opens towards said mounting head). Particularly, said hinge axis is located at an outer edge of said connecting device.

In a further preferred embodiment of a windscreen wiper device according to the invention said mounting head has an at least substantially U-shaped cross-section at the location of its attachment to said connecting device, wherein each leg of said U-shaped cross-section comprises clamping members formed as inwardly bend edges at the end of said legs, which engage around longitudinal sides of said connecting device that face away from each other. Hence, a transverse locking of said connecting device inside said mounting head is achieved.

In a further preferred embodiment of a windscreen wiper device in accordance with the invention said hole is provided in a base of the U-shaped cross-section of said mounting head. In this embodiment said resilient tongue may be provided on an upper part of said connecting device. In addition thereto or instead thereof the connecting device may be provided with at least two lateral resilient tongues extending outwardly, wherein each tongue engages in a correspondingly shaped hole provided in each leg of the U-shaped cross-section of said mounting head. Said holes preferably have a closed circumference. Such closed holes enhance the retention of the connection device onto the mounting head in all possible directions, particularly both horizontally and vertically.

Preferably, said mounting head has an at least substantially U-shaped cross-section at the location of its attachment to said connecting device, and wherein each leg of said U-shaped cross-section comprises clamping members formed as inwardly bend edges at the end of said legs, which engage around longitudinal sides of said connecting device that face away from each other. Accordingly, the interconnection thus achieved also ensures a blockage in vertical, that is transverse direction relative to the longitudinal direction of the wiper blade.

The invention will now be explained in more detail with reference to figures illustrated in a drawing, wherein:
- Figure 1 is a perspective, schematic and exploded view of an embodiment of a windscreen wiper device in accordance with European patent application no. 08160187.4 mentioned earlier;
- Figure 2 shows a perspective, schematic view of a connecting device and a mounting head connected together, wherein a spacer according to the invention is used;
- Figure 3 schematically shows a perspective and a front view of the connecting device equipped with the spacer of figure 2;
- Figure 4 relates to a way for removing said spacer from said connecting device of figures 2 and 3;
- Figure 5 shows various details of the mounting head and a driving shaft, as well as the way they are interconnected; and
- Figure 6 relates to the use of a nut to clamp said mounting head onto the shaft of figure 5.

The windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the wiper blade 2, as it were, which is thus biassed in a curved position (the curvature in operative position being that of a windscreen to be wiped). Neighboring ends 5 of the strips 4 at one end of said wiper blade 2 are interconnected by means of a connecting piece 6 or "end cap" functioning as clamping member. In this embodiment, the connecting piece 6 is a separate constructional element, which may be form-locked ("positive locking" or "having a positive fit") or force-locked to the ends 5 of the strips 4. In another preferred embodiment, said connecting piece 6 is in one piece with the strips 4 made of spring band steel. In the latter case said connecting piece 6 forms a transverse bridge for the strips 4, as it were.

The windscreen wiper device 1 is furthermore built up of a connecting device 7 of plastic material for a mounting head 8. Alternatively, the connecting device 7 may also be made of metal, such as steel or aluminum. The connecting device 7 may comprise clamping members that are integral therewith, which engage around longitudinal sides of the strips 4 that face away from each other, as a result of which the connecting device 7 is firmly attached to the unit consisting of the wiper blade 2 and the strips 4. As can be seen, the connecting device 7 is connected to said wiper blade 2 at its other end, that is opposite the connecting piece 6.

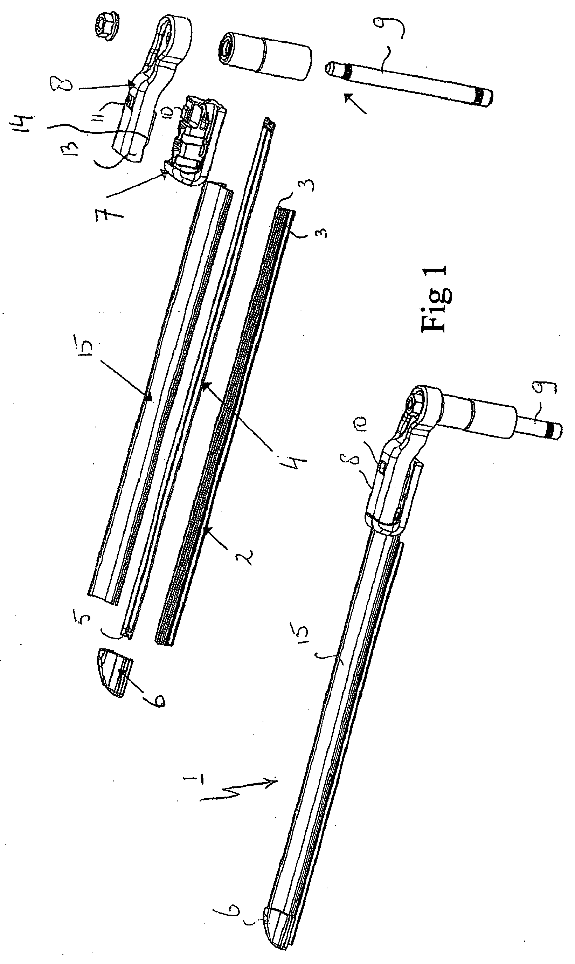

As illustrated in figures 1 the windscreen wiper device 1 according to the invention comprises a plastic or metallic mounting head 8 which can be fixed for rotation to a shaft 9 driven, via a mechanism not illustrated, by a small motor. In use, the shaft 9 rotates alternately in a clockwise and in a counter-clockwise sense carrying the mounting head 8 into rotation also, which in turn draws the connecting device 7 in rotation and thereby moves the wiper blade 2.

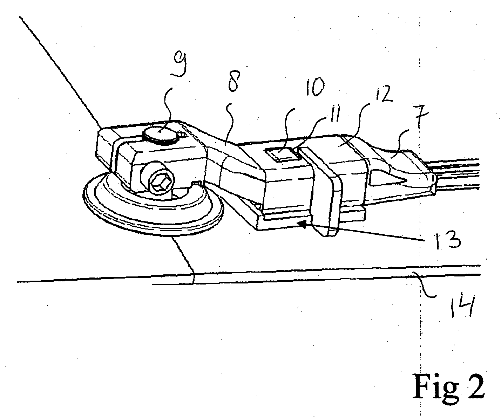

With reference to figures 2, 3 and 4 the connecting device 7 comprises one resilient tongue, 10 extending outwardly, while the mounting head 8 has an U-shaped cross-section at the location of its connection to said connecting device 7, so that the tongue 10 engages in an identically shaped hole 11 provided in a base 12 of said U-shaped cross-section. The connecting device 7 can be easily slid in horizontal direction on a free end of the mounting head 8. During this sliding movement the resilient tongue 10 is initially pushed in against a spring force and then allowed to spring back into said hole 11, thus snapping, that is clipping the resilient tongue 10 into the hole 11. This is a so-called bayonet-connection. The mounting head 8 together with the connecting device 7 are then ready for use. By subsequently pushing in again said resilient tongue 10 against the spring force (as if it were a push button), the connecting device 7 together with the wiper blade 2 (not shown) may be released from the mounting head 8. Dismounting the connecting device 7 with the wiper blade 2 (not shown) from the mounting head 8 is thus realized by sliding the connecting device 7 together with the wiper blade 2 (not shown) in a direction away from the mounting head 8.

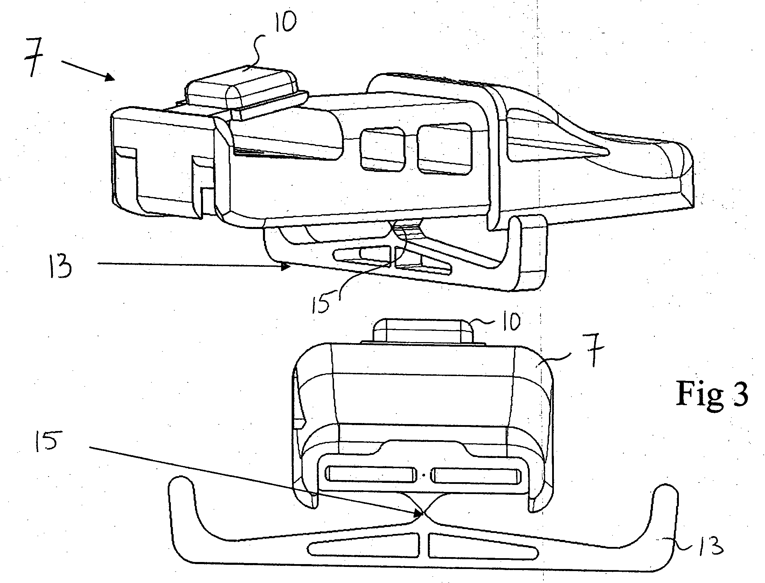

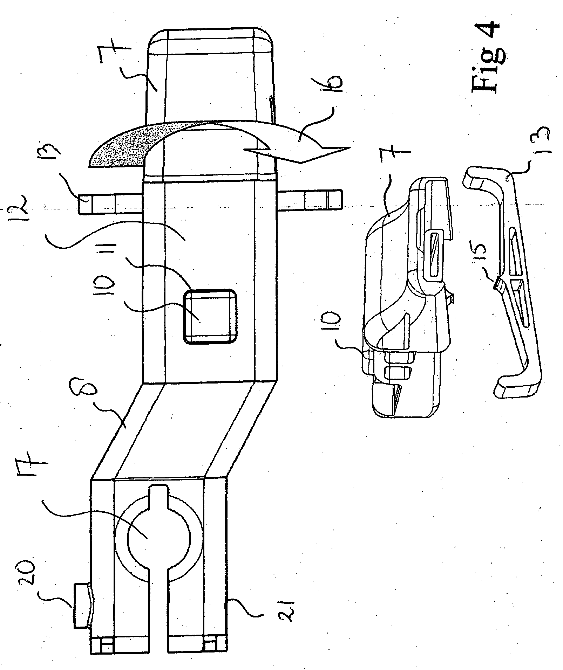

As shown in figures 2 and 3, said connecting device 7 is equipped in one piece therewith with a W-shaped spacer of distance means 13. Said spacer 13 ensures that the mounting head 8 is mounted onto the shaft in a well-defined and controllable manner, wherein the mounting head 8 is kept at a predetermined (constant) distance from a windscreen 14 to be wiped. As can be seen from figure 3, a plastic unit consisting of said connecting device 7 and said spacer 13 comprises a weakening line or tight junction 15 to allow separation of said spacer 13 from said connecting device 7 through a torque action in the direction of an arrow 16 shown in figure 4.

Figure 4 schematically relates to a top view of said connecting device 7 and said mounting head 8 being connected together (with the spacer 13 still being present) and a perspective view of the connecting device 7 seen from the back (with the spacer 13 as a separate element being already removed from the connecting device 7).

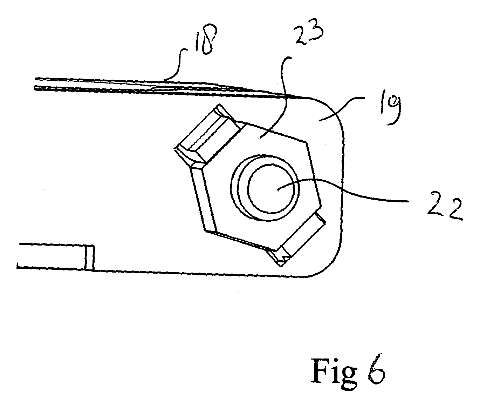

As can be seen from figures 4, 5 and 6, said mounting head 8 comprises a hole 17 to receive said shaft 9, wherein said mounting head 8 further comprises side walls 18,19 extending beyond said hole 17 (and said shaft 9 in mounted position thereof). Said side walls 18,19 are provided with a co-axial holes 20,21 for receiving a pin 22 having screw thread for clamping said mounting head 8 around said shaft 9 through elastic deformation of said side walls 18,19. Said elastic deformation is finalized by screwing a nut 23 onto said pin (figure 6). The mounting head 8 as a whole is particularly made of a sheet material, such as sheet metal, to allow (elastic of plastic) deformation thereof during said clamping action. For esthetic reasons the interconnection between the mounting head 8 and the shaft 9 is covered by a cap 24.

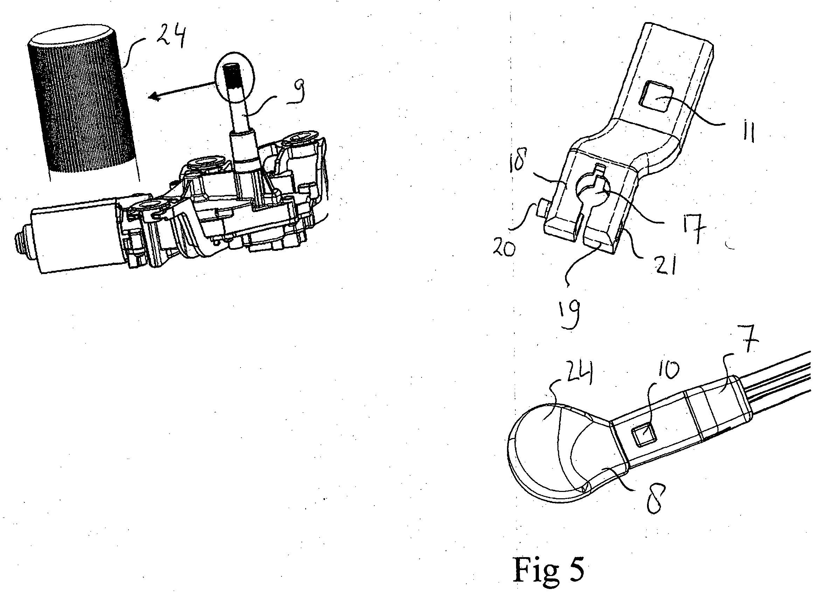

With reference to figure 5, said shaft 9 along a portion of its length and around its outer surface is provided with a profile. Said profile, as shown, includes longitudinal grooves 24 extending in co-axial direction of said shaft 9. As a result, an improved fixation without any play (i.e. without axial movement and/or rotational movement) between said mounting head 8 and said shaft 9 is realized.

The invention is not restricted to the variants shown in the drawing, but it also extends to other embodiments that fall within the scope of the appended claims.

## Claims

1. A windscreen wiper device (1), particularly for automobiles, comprising an elastic, elongated carrier element, as well as an elongated wiper blade (2) of a flexible material, which can be placed in abutment with a windscreen (14) to be wiped, which wiper blade (2) is of the flat blade type and includes at least one groove (3), in which groove (3) a longitudinal strip (4) of the carrier element is disposed, wherein said windscreen wiper device (1) further comprises a mounting head (8) for transferring a reciprocal movement to said wiper blade (2), wherein said windscreen wiper device (1) further comprises a connecting device (7) for detachably connecting said wiper blade (2) directly to said mounting head (8), wherein said connecting device (7) is positioned near one end of said wiper blade (2), **characterized in that** said connecting device (7) is provided with a spacer (13) detachably connected to said connecting device (7) for maintaining a predetermined distance between said connecting device (7) and said windscreen (14) to be wiped.

2. A windscreen wiper device (1) according to claim 1, wherein said spacer (13) extends in downward direction from a bottom of said connecting device (7) to said windscreen (14) to be wiped, and wherein said spacer (13) can be placed in abutment with said windscreen (14) to be wiped.

3. A windscreen wiper device (1) according to claim 1 or 2, wherein said spacer (13) is detachably connected to said connecting device (7) through a snapping operation.

4. A windscreen wiper device (1), particularly for automobiles, comprising an elastic, elongated carrier element, as well as an elongated wiper blade (2) of a flexible material, which can be placed in abutment with a windscreen (14) to be wiped, which wiper blade (2) is of the flat blade type and includes at least one groove (3), in which groove (3) a longitudinal strip (4) of the carrier element is disposed, wherein said windscreen wiper device (1) further comprises a mounting head (8) for transferring a reciprocal movement to said wiper blade (2), wherein said windscreen wiper device (1) further comprises a connecting device (7) for detachably connecting said wiper blade (2) directly to said mounting head (8), wherein said connecting device (7) is positioned near one end of said wiper blade (2), **characterized in that** said connecting device (7) is provided with a spacer (13) for maintaining a predetermined distance between said connecting device (7) and said windscreen (14) to be wiped, wherein said connecting device (7) and said spacer (13) are in one piece, and wherein a unit consisting of said connecting device (7) and said spacer (13) comprises a weakening to allow separation of said spacer (13) from said connecting device (7).

5. A windscreen wiper device (1) according to claim 4, wherein a unit consisting of said connecting device (7) and said spacer (13) comprises a weakening line (15) to allow separation of said spacer (13) from said connecting device (7) through a torque action.

6. A windscreen wiper device (1) according to any of the preceding claims 1 through 5, wherein said mounting head (8) is fixed for rotation to a shaft (9), and wherein said shaft (9) is rotatable alternately in a clockwise and in a counter-clockwise sense carrying said mounting head (8) into rotation.

7. A windscreen wiper device (1) according to claim 6, wherein said shaft (9) along a portion of its length and around at least a part of its outer surface is provided with a profile.

8. A windscreen wiper device (1) according to claim 7, wherein said profile comprises longitudinal grooves extending in co-axial direction of said shaft (9).

9. A windscreen wiper device (1) according to claim 6, 7 or 8, wherein said mounting head (8) is clamped around said shaft (9).

10. A windscreen wiper device (1) according to claim 9, wherein said mounting head (8) comprises a hole (17) to receive said shaft (9), wherein said mounting head (8) further comprises side walls (18,19) extending beyond said shaft (9) in mounted position thereof, and wherein said side walls (18,19)are provided with a co-axial holes (20,21) for receiving a pin (22) for clamping said mounting head (8) around said shaft (9) through deformation of said side walls (18,19).

11. A windscreen wiper device (1) according to claim 10, wherein said mounting head (8) is clamped around said shaft (9) through screwing a nut (23) onto said pin (22).

12. A windscreen wiper device (1) according to any of the preceding claims 1 through 11, wherein said windscreen wiper device (1) further comprises a connecting piece (6) positioned near the other end of said wiper blade (2) and connected to one end of said longitudinal strip (4).

13. A windscreen wiper device (1) according to any of the preceding claims 1 through 12, wherein said longitudinal strip (4) is biassed in such a way that its curvature near the connecting device (7) is larger than its curvature near the other end of said wiper blade (2).

14. A windscreen wiper device (1) according to any of the preceding claims 1 through 13, wherein the interconnection between the mounting head (8) and the wiper blade (2) does not allow any pivotal movement.

15. A windscreen wiper device (1) according to any of the preceding claims 1 through 14, wherein said connecting device (7) comprises at least one resilient tongue (10) engaging in a correspondingly shaped hole (11) provided in said mounting head (8), and wherein said resilient tongue (10) is movable between a outward position retaining said wiper blade (2) onto said mounting head (8) and an inward position releasing said wiper blade (2) from said mounting head (8).

16. A windscreen wiper device (1) according to claim 15, wherein said mounting head (8) has an at least substantially U-shaped cross-section at the location of its attachment to said connecting device (7), and wherein each leg (13) of said U-shaped cross-section comprises clamping members formed as inwardly bend edges (14) at the end of said legs (13), which engage around longitudinal sides of said connecting device (7) that face away from each other.

17. A windscreen wiper device (1) according to claim 15 or 16, wherein said hole (11) is provided in a base (12) of the U-shaped cross-section of said mounting head (8) .

## Patentansprüche

1. Scheibenwischervorrichtung (1), insbesondere für Automobile, umfassend: ein elastisches, längliches Trägerelement, sowie ein längliches Wischblatt (2) aus einem flexiblen Material, das an eine zu wischende Windschutzscheibe (14) anliegend platziert werden kann, wobei das Wischblatt (2) eines des Flachbalkentyps ist und mindestens eine Rille (3) beinhaltet, wobei in dieser Rille (3) ein Längsstreifen (4) des Trägerelements angeordnet ist, wobei die Scheibenwischervorrichtung (1) weiter einen Montagekopf (8) zum Übertragen einer Hin- und Her-Bewegung an das Wischblatt (2) umfasst, wobei die Scheibenwischervorrichtung (1) weiter eine Verbindungsvorrichtung (7) zum lösbaren Verbinden des Wischblatts (2) direkt an den Montagekopf (8) umfasst, wobei die Verbindungsvorrichtung (7) in der Nähe eines Endes des Wischblatts (2) positioniert ist, **dadurch gekennzeichnet, dass** die Verbindungsvorrichtung (7) mit einem, lösbar mit der Verbindungsvorrichtung (7) verbundenen, Abstandshalter (13) versehen ist, um eine vorgegebene Distanz zwischen der Verbindungsvorrichtung (7) und der zu wischenden Windschutzscheibe (14) aufrecht zu erhalten.

2. Scheibenwischervorrichtung (1) gemäß Anspruch 1, wobei sich der Abstandshalter (13) in Abwärtsrichtung von einer Unterseite der Verbindungsvorrichtung (7) zu der zu wischenden Windschutzscheibe (14) erstreckt, und wobei der Abstandshalter (13) anliegend an die zu wischende Windschutzscheibe (14) platziert werden kann.

3. Scheibenwischervorrichtung (1) gemäß Anspruch 1 oder 2, wobei der Abstandshalter (13) durch einen Einrastvorgang lösbar mit der Verbindungsvorrichtung (7) verbunden ist.

4. Scheibenwischervorrichtung (1), insbesondere für Automobile, umfassend: ein elastisches, längliches Trägerelement, sowie ein längliches Wischblatt (2) aus einem flexiblen Material, das an eine zu wischende Windschutzscheibe (14) anliegend platziert werden kann, wobei das Wischblatt (2) eines des Flachbalkentyps ist und mindestens eine Rille (3) beinhaltet, wobei in dieser Rille (3) ein Längsstreifen (4) des Trägerelements angeordnet ist, wobei die Scheibenwischervorrichtung (1) weiter einen Montagekopf (8) zum Übertragen einer Hin- und Her-Bewegung an das Wischblatt (2) umfasst, wobei die Scheibenwischervorrichtung (1) weiter eine Verbindungsvorrichtung (7) zum lösbaren Verbinden des Wischblatts (2) direkt an den Montagekopf (8) umfasst, wobei die Verbindungsvorrichtung (7) in der Nähe eines Endes des Wischblatts (2) positioniert ist, **dadurch gekennzeichnet, dass** die Verbindungsvorrichtung (7) mit einem Abstandshalter (13) versehen ist, um eine vorgegebene Distanz zwischen der Verbindungsvorrichtung (7) und der zu wischenden Windschutzscheibe (14) aufrecht zu erhalten, wobei die Verbindungsvorrichtung (7) und der Abstandshalter (13) einstückig sind, und wobei eine Einheit, bestehend aus der Verbindungsvorrichtung (7) und dem Abstandshalter (13), eine Schwächung aufweist, um eine Trennung des Abstandshalters (13) von der Verbindungvorrichtung (7) zu ermöglichen.

5. Scheibenwischervorrichtung (1) gemäß Anspruch 4, wobei eine Einheit, bestehend aus der Verbindungsvorrichtung (7) und dem Abstandshalter (13), eine Schwächungslinie (15) aufweist, um die Trennung des Abstandshalters (13) von der Verbindungvorrichtung (7) durch eine Dreheinwirkung zu ermöglichen.

6. Scheibenwischervorrichtung (1) gemäß einem der vorstehenden Ansprüche 1 bis 5, wobei der Montagekopf (8) zum Drehen an einer Welle (9) befestigt ist, und wobei die Welle (9) alternierend in einem Uhrzeigersinn und in einem gegen den Uhrzeigersinn drehbar ist, um den Montagekopf (8) zum Drehen mitzutragen.

7. Scheibenwischervorrichtung (1) gemäß Anspruch 6, wobei die Welle (9) entlang eines Abschnitts ihrer Länge und um zumindest eines Teils ihrer äußeren Oberfläche mit einem Profil versehen ist.

8. Scheibenwischervorrichtung (1) gemäß Anspruch 7, wobei das Profil Längsrillen aufweist, die sich in koaxiale Richtung der Welle (9) erstrecken.

9. Scheibenwischervorrichtung (1) gemäß Anspruch 6, 7 oder 8, wobei der Montagekopf (8) um die Welle (9) geklemmt ist.

10. Scheibenwischervorrichtung (1) gemäß Anspruch 9, wobei der Montagekopf (8) ein Loch (17) aufweist um die Welle (9) aufzunehmen, wobei der Montagekopf (8) weiter Seitenwände (18, 19) aufweist, die sich in einer montierten Stellung desselben über die Welle (9) hinaus erstrecken, und wobei die Seitenwände (18, 19) mit koaxialen Löchern (20, 21) versehen sind, zum Aufnehmen eines Stifts (22) zum Klemmen des Montagekopfs (8) um die Welle (9) durch Verformung der Seitenwände (18, 19).

11. Scheibenwischervorrichtung (1) gemäß Anspruch 10, wobei der Montagekopf (8) um die Welle (9) geklemmt ist durch Schrauben einer Mutter (23) auf den Stift (22).

12. Scheibenwischervorrichtung (1) gemäß einem der vorstehenden Ansprüche 1 bis 11, wobei die Scheibenwischervorrichtung (1) weiter ein Verbindung stück (6) aufweist, das in der Nähe des anderen Endes des Wischblatts (2) positioniert ist und mit einem Ende des Längsstreifens (4) verbunden ist.

13. Scheibenwischervorrichtung (1) gemäß einem der vorstehenden Ansprüche 1 bis 12, wobei der Längsstreifen (4) in einer Art und Weise vorgespannt ist, dass seine Krümmung in der Nähe der Verbindungsvorrichtung (7) größer als seine Krümmung in der Nähe des anderen Endes des Wischblatts (2) ist.

14. Scheibenwischervorrichtung (1) gemäß einem der vorstehenden Ansprüche 1 bis 13, wobei die Kopplung zwischen dem Montagekopf (8) und dem Wischblatt (2) keinerlei Schwenkbewegung ermöglicht.

15. Scheibenwischervorrichtung (1) gemäß einem der vorstehenden Ansprüche 1 bis 14, wobei die Verbindungsvorrichtung (7) mindestens eine federnde Zunge (10) aufweist, die in ein, am Montagekopf (8) bereitgestelltes, korrespondierend geformtes Loch (11) eingreift, und wobei die federnde Zunge (10) bewegbar ist zwischen einer äußeren Stellung, in der das Wischblatt (2) auf dem Montagekopf (8) festgehalten wird, und einer inneren Stellung, in der das Wischblatt (2) von dem Montagekopf (8) freigegeben wird.

16. Scheibenwischervorrichtung (1) gemäß Anspruch 15, wobei der Montagekopf (8) einen zumindest im Wesentlichen U-förmigen Querschnitt am Ort seiner Befestigung an der Verbindungsvorrichtung (7) aufweist, und wobei jeder Schenkel (13) des U-förmigen Querschnitts Klemmelemente aufweist, die als einwärts gebogene Kanten (14) an dem Ende der Schenkel (13) geformt sind, und die voneinander abgewandte Längsseiten der Verbindungsvorrichtung (7) umgreifen.

17. Scheibenwischervorrichtung (1) gemäß Anspruch 15 oder 16, wobei das Loch (11) in einer Basis (12) des U-förmigen Querschnitts des Montagekopfs (8) bereitgestellt ist.

## Revendications

1. Dispositif d'essuie-glace (1), en particulier pour automobiles, comprenant un élément de support élastique, allongé, ainsi qu'un balai d'essuie-glace (2) allongé réalisé avec un matériau flexible, qui peut être placé en butée contre un pare-brise (14) à essuyer, ledit balai d'essuie-glace (2) est du type à balai plat et comprend au moins une rainure (3), dans laquelle rainure (3), est disposée une bande longitudinale (4) de l'élément de support, dans lequel ledit dispositif d'essuie-glace (1) comprend en outre une tête de montage (8) pour transférer un mouvement de va-et-vient audit balai d'essuie-glace (2), dans lequel ledit dispositif d'essuie-glace (1) comprend en outre un dispositif de raccordement (7) pour raccorder, de manière détachable, ledit balai d'essuie-glace (2) directement avec ladite tête de montage (8), dans lequel ledit dispositif de raccordement (7) est positionné à proximité d'une extrémité dudit balai d'essuie-glace (2), **caractérisé en ce que** ledit dispositif de raccordement (7) est prévu avec un dispositif d'espacement (13) raccordé de manière détachable audit dispositif de raccordement (7) pour maintenir une distance prédéterminée entre ledit dispositif de raccordement (7) et ledit pare-brise (14) à essuyer.

2. Dispositif d'essuie-glace (1) selon la revendication 1, dans lequel ledit dispositif d'espacement (13) s'étend dans une direction descendante à partir d'un fond dudit dispositif de raccordement (7) jusqu'au pare-brise (14) à essuyer, et dans lequel ledit dispositif d'espacement (13) peut être placé en butée avec ledit pare-brise (14) à essuyer.

3. Dispositif d'essuie-glace (1) selon la revendication 1 ou 2, dans lequel ledit dispositif d'espacement (13) est raccordé, de manière détachable, audit dispositif de raccordement (7) par une opération d'encliquetage.

4. Dispositif d'essuie-glace (1), en particulier pour automobiles, comprenant un élément de support élastique, allongé, ainsi qu'un balai d'essuie-glace (2) allongé réalisé avec un matériau flexible, qui peut être placé en butée contre un pare-brise (14) à essuyer, lequel balai d'essuie-glace (2) est du type à balai plat et comprend au moins une rainure (3), dans laquelle rainure (3), est disposée une bande longitudinale (4) de l'élément de support, dans lequel ledit dispositif d'essuie-glace (1) comprend en outre une tête de montage (8) pour transférer un mouvement de va-et-vient audit balai d'essuie-glace (2), dans lequel ledit dispositif d'essuie-glace (1) comprend en outre un dispositif de raccordement (7) pour raccorder, de manière détachable, ledit balai d'essuie-glace (2) directement à ladite tête de montage (8), dans lequel ledit dispositif de raccordement (7) est positionné à proximité d'une extrémité dudit balai d'essuie-glace (2), **caractérisé en ce que** ledit dispositif de raccordement (7) est prévu avec un dispositif d'espacement (13) pour maintenir une distance prédéterminée entre ledit dispositif de raccordement (7) et ledit pare-brise (14) à essuyer, dans lequel ledit dispositif de raccordement (7) et ledit dispositif d'espacement (13) sont d'un seul tenant, et dans lequel une unité se composant dudit dispositif de raccordement (7) et dudit dispositif d'espacement (13) comprend un affaiblissement pour permettre la séparation dudit dispositif d'espacement (13) dudit dispositif de raccordement (7).

5. Dispositif d'essuie-glace (1) selon la revendication 4, dans lequel une unité se composant dudit dispositif de raccordement (7) et dudit dispositif d'espacement (13) comprend une ligne de faiblesse (15) pour permettre la séparation dudit dispositif d'espacement (13) dudit dispositif de raccordement (7) par une action de couple.

6. Dispositif d'essuie-glace (1) selon l'une quelconque des revendications 1 à 5, dans lequel ladite tête de montage (8) est fixée pour la rotation sur un arbre (9), et dans lequel ledit arbre (9) peut tourner de manière alternée dans le sens des aiguilles d'une montre et dans le sens inverse des aiguilles d'une montre entraînant ladite tête de montage (8) en rotation.

7. Dispositif d'essuie-glace (1) selon la revendication 6, dans lequel ledit arbre (9) le long d'une partie de sa longueur et autour d'au moins une partie de sa surface externe est prévu avec un profilé.

8. Dispositif d'essuie-glace (1) selon la revendication 7, dans lequel ledit profilé comprend des rainures longitudinales s'étendant dans la direction coaxiale dudit arbre (9).

9. Dispositif d'essuie-glace (1) selon la revendication 6, 7 ou 8, dans lequel ladite tête de montage (8) est serrée autour dudit arbre (9).

10. Dispositif d'essuie-glace (1) selon la revendication 9, dans lequel ladite tête de montage (8) comprend un trou (17) pour recevoir ledit arbre (9), dans lequel ladite tête de montage (8) comprend en outre des parois latérales (18, 19) s'étendant au-delà dudit arbre (9) dans sa position montée, et dans lequel lesdites parois latérales (18, 19) sont prévues avec un trou coaxial (20, 21) pour recevoir une broche (22) afin de serrer ladite tête de montage (8) autour dudit arbre (9) par le biais de la déformation desdites parois latérales (18, 19).

11. Dispositif d'essuie-glace (1) selon la revendication 10, dans lequel ladite tête de montage (8) est serrée autour dudit arbre (9) en vissant un écrou (23) sur ladite broche (22).

12. Dispositif d'essuie-glace (1) selon l'une quelconque des revendications 1 à 11, dans lequel ledit dispositif d'essuie-glace (1) comprend en outre une pièce de raccordement (6) positionnée à proximité de l'autre extrémité dudit balai d'essuie-glace (2) et raccordée à une extrémité de ladite bande longitudinale (4).

13. Dispositif d'essuie-glace (1) selon l'une quelconque des revendications 1 à 12, dans lequel ladite bande longitudinale (4) est sollicitée de sorte que sa courbure à proximité du dispositif de raccordement (7) est plus importante que sa courbure à proximité de l'autre extrémité dudit balai d'essuie-glace (2).

14. Dispositif d'essuie-glace (1) selon l'une quelconque des revendications 1 à 13, dans lequel l'interconnexion entre la tête de montage (8) et le balai d'essuie-glace (2) ne permet pas de mouvement pivotant.

15. Dispositif d'essuie-glace (1) selon l'une quelconque des revendications 1 à 14, dans lequel ledit dispositif de raccordement (7) comprend au moins une languette résiliente (10) se mettant en prise dans un trou de forme correspondante (11) prévu dans ladite tête de montage (8), et dans lequel ladite languette résiliente (10) est mobile entre une position vers l'extérieur retenant ledit balai d'essuie-glace (2) sur ladite tête de montage (8) et une position vers l'intérieur libérant ledit balai d'essuie-glace (2) de ladite tête de montage (8).

16. Dispositif d'essuie-glace (1) selon la revendication 15, dans lequel ladite tête de montage (8) a une section transversale au moins sensiblement en forme de U à l'emplacement de sa fixation avec ledit dispositif de raccordement (7), et dans lequel chaque patte (13) de ladite section transversale en forme de U comprend des éléments de serrage formés comme des bords pliés vers l'intérieur (14) au niveau de l'extrémité desdites pattes (13) qui se mettent en prise autour des côtés longitudinaux dudit dispositif de raccordement (7) qui sont disposés à l'opposé.

17. Dispositif d'essuie-glace (1) selon la revendication 15 ou 16, dans lequel ledit trou (11) est prévu dans une base (12) de la section transversale en forme de U de ladite tête de montage (8).
